# EUROPÄISCHE PATENTSCHRIFT

(11) **EP 3 372 315 B1**
(45) Veröffentlichungstag und Bekanntmachung des Hinweises auf die Patenterteilung: **14.04.2021**
(21) Anmeldenummer: 18159766.7
(22) Anmeldetag: 02.03.2018
(51) Int. Cl.: B05B 1/18, B05B 1/30, B05B 15/652, F16K 1/14, A47K 3/28, B05B 15/74

(54) **SCHWENKBRAUSE MIT ABSPERRVENTIL**
PIVOTING NOZZLE WITH SHUT-OFF VALVE
DOUCHE PIVOTANTE À SOUPAPE D'ARRÊT

(30) Priorität: 09.03.2017 DE 102017203946
(43) Veröffentlichungstag der Anmeldung: 12.09.2018
(73) Patentinhaber: Hansgrohe SE, 77761 Schiltach (DE)
(72) Erfinder: Bühler, Jürgen, 77761 Schiltach (DE); Dieterle, Daniel Philipp, 77709 Wolfach-Kirnbach (DE); Friedrich, Stephanie, 78144 Schramberg (DE)
(74) Vertreter: Patentanwälte Ruff, Wilhelm, Beier, Dauster & Partner mbB

(56) Entgegenhaltungen:
- EP-A1- 2 474 673
- EP-B1- 1 947 251
- DE-A1-102013 001 931
- GB-A- 2 330 319
- US-A1- 2012 286 073

## Beschreibung

Die Erfindung bezieht sich auf eine Schwenkbrause nach dem Oberbegriff des Anspruchs 1.

Die Schwenkbrause weist einen Brausekörper auf der einen Grundkörper, einen Schwenkkörper, der einen Brauseaustritt beinhaltet und relativ zum Grundkörper zwischen einer Ruheposition und einer Betriebsposition schwenkbeweglich angeordnet ist, einen Brausefluideinlass und einen Fluidströmungsweg vom Brausefluideinlass zum Brauseaustritt umfasst. Unter Ruheposition ist vorliegend eine Position des Schwenckörpers zu verstehen, in welcher die Schwenkbrause nicht brauseaktiv ist, d.h. es tritt kein Brausestrahl aus dem Brauseaustritt aus. Unter Betriebsposition ist vorliegend eine Position des Schwenkkörpers zu verstehen, in welcher die Schwenkbrause brauseaktiv ist, d.h. die Schwenkbrause gibt das über den Brausefluideinlass zugeführte Brausefluid als Brausestrahl am Brauseaustritt ab.

Im Brausekörper ist im Fluidströmungsweg zwischen dem Brausefluideinlass und dem Brauseaustritt ein Absperrventil angeordnet, das dafür eingerichtet ist, den Fluidströmungsweg abhängig von einer Schwenklage des Schwenkkörpers abzusperren. Dabei sperrt es den Fluidströmungsweg in der Ruheposition des Schwenkkörpers vollständig ab und gibt ihn in der Betriebsposition des Schwenkkörpers vollständig frei. Zum einen wird dadurch vermieden, dass in der Ruheposition des Schwenkkörpers, in welcher die Schwenkbrause inaktiv sein soll, aus dem Brauseaustritt Brausefluid austreten kann, auch wenn eventuell am Brausefluideinlass des Brausekörpers schon oder noch Brausefluid ansteht bzw. diesem zugeführt wird. Zum anderen ist gewährleistet, dass in der Betriebsposition des Schwenkkörpers, in welcher die Schwenkbrause aktiv sein soll, Brausefluid ungehindert dem Brauseaustritt zugeführt und aus diesem als gewünschter Brausestrahl austreten kann. Vorteilhafterweise erfolgt somit bei dieser Schwenkbrause das Absperren des Brausefluids durch ein in den Brausekörper integriertes Absperrventil, das seine Absperrfunktion abhängig von der Verschwenkung des Schwenkkörpers ausführt.

In der Patentschrift EP 1 947 251 B1 ist eine als sanitäre Duschbrause zur Wand- und/oder Deckenmontage ausgeführte Schwenkbrause mit einem Brausekörper offenbart, der einen Grundkörper mit ebener Außenoberfläche und einen am Grundkörper relativ zu diesem schwenkbeweglich angeordneten Schwenkkörper beinhaltet. Der Schwenkkörper ist von einem Brausenträger gebildet, der eine oder mehrere Brauseeinheiten als Brauseaustritt aufweist und relativ zum Grundkörper zwischen einer brauseinaktiven Ruheposition und einer brauseaktiven Betriebsposition schwenkbeweglich an selbigem angeordnet ist, wobei der Brausekörper des Weiteren einen Brausefluideinlass und einen Fluidströmungsweg vom Brausefluideinlass zum Brauseaustritt aufweist. Bei dieser Schwenkbrause ist der Schwenkkörper fluiddruckgetrieben. Dazu ist ein Schwenkantrieb vorgesehen, der einen von einem Fluiddruck des Brausefluids beaufschlagbaren Schieberkolben umfasst, welcher mit einem endseitigen Druckzapfen in seitlichem Abstand zur Schwenkachse des Brausenträgers gegen diesen andrückt.

Schwenkbrausen, bei denen ein Schwenkkörper durch den Benutzer von Hand in unterschiedliche Brausestellungen verschwenkt werden kann, sind beispielsweise in der Sanitärtechnik in vielerlei Arten gebräuchlich, auch in Ausführungen mit einem Absperrventil, das der Benutzer über ein hierfür vorgesehenes Ventilbedienelement von Hand betätigt.

Eine in der Offenlegungsschrift EP 1 759 770 A1 offenbarte sanitäre Handbrause besitzt einen zweiteiligen Brausekörper mit zwei schwenkbar miteinander verbundenen Teilen, wobei in den einen Teil ein Umstellventil integriert ist, das durch die Schwenkbewegung der beiden Teile relativ zueinander umstellbar ist, um zugeführtes Wasser wahlweise unterschiedlichen Brauseauslassöffnungen zuführen zu können. Die Handbrause weist wie üblich einen Anschluss an einen zugehörigen Duschschlauch oder eine andere entsprechende Wasserzuleitung auf.

Die Offenlegungsschrift US 2012/0286073 A1 offenbart eine Schwenkbrause der eingangs genannten, gattungsgemäßen Art. Bei der dortigen Schwenkbrause beinhaltet das Absperrventil einen zylindrischen, mit Fluiddurchlassöffnungen versehenen Ventilschließkörper, der um seine Längsachse drehbeweglich und mit dem Schwenkkörper drehfest gekoppelt in einem den Schwenkkörper mit dem Grundkörper verbindenden Schwenkgelenk angeordnet ist. Je nach Drehlage gibt der Ventilschließkörper den Fluidströmungsweg vom Brausefluideinlass zum Brauseaustritt frei oder sperrt ihn ab.

Die Offenlegungsschrift EP 2 474 673 A1 offenbart eine weitere Schwenkbrause der eingangs genannten, gattungsgemäßen Art, wobei die dortige Schwenkbrause einen mit Brauseöffnungen versehenen Bügel beinhaltet, der schwenkbeweglich an einem Spülbeckenrand angeordnet ist. Als Absperrventil fungiert ein gleichzeitig als Schwenkachse für den Bügel fungierendes Rohrstück, dem stirnseitig Wasser zugeführt werden kann und das umfangsseitig mit mindestens einer Austrittsöffnung versehen ist, und ein im Bügel angeordneter Schlauch, der einen Innenraum des Bügels in zwei Kammern aufteilt und mit einem stirnseitigen Schlaucheintritt je nach Schwenklage des Bügels an die umfangsseitige Austrittsöffnung des Rohrstücks angekoppelt ist oder diese freigibt.

Die Offenlegungsschrift GB 2 330 319 A offenbart eine Brause mit einem Brausekörper, der einen Grundkörper und einen relativ zum Grundkörper zwischen einer Ruheposition und einer Betriebsposition beweglich angeordneten Brauseaustrittskörper sowie einen Luftzufuhrkanal in den Grundkörper aufweist, der in der Betriebsposition des Brauseaustrittskörpers ganz oder teilweise geschlossen und in der Ruheposition des Brauseaustrittskörpers geöffnet ist, so dass im Grundkörper Luft zirkulieren kann, um Feuchtigkeit zu entfernen. Weiter ist ein optionaler Spülkanal vorgesehen, der über ein aktuatorbetätigtes Ventil mit einem Brausefluideinlass des Brausekörpers in Fluidverbindung gebracht oder gegenüber diesem abgesperrt werden kann. Das Ventil und/oder der Brauseaustrittskörper ist durch einen fluiddruckbetätigten Aktuator bewegbar, der Mittel zur Bereitstellung einer Hysterese für das Bewegen des Ventils aus einer Geschlossen-Position heraus und/oder des Brauseaustrittskörpers von seiner Ruheposition in seine Betriebsposition aufweist, um einen Wasserspülstrom mit Wasser zu ermöglichen, das dem Brausefluideinlass zugeführt wird, bevor der Brauseaustrittskörper seine Betriebsposition erreicht.

Der Erfindung liegt als technisches Problem die Bereitstellung einer Schwenkbrause der eingangs genannten Art mit gegenüber dem oben erwähnten Stand der Technik verbesserten Funktionalitäten bzw. Eigenschaften zugrunde.

Die Erfindung löst dieses Problem durch die Bereitstellung einer Schwenkbrause mit den Merkmalen des Anspruchs 1. Vorteilhafte, optional realisierbare Weiterbildungen der Erfindung sind in den Unteransprüchen angegeben.

Erfindungsgemäß weist das Absperrventil eine Schalthysterese auf, durch die es den Fluidströmungsweg beim Verschwenken des Schwenkkörpers aus der Ruheposition in Richtung der Betriebsposition später freizugeben beginnt als es ihn beim Verschwenken des Schwenkkörpers aus der Betriebsposition in Richtung der Ruheposition vollständig absperrt. Mit anderen Worten sperrt das Absperrventil beim Verschwenken des Schwenkkörpers aus der Ruheposition heraus die Brausefluidzufuhr zum Brauseaustritt bis zum Erreichen eines vorgegebenen Freigabe-Schwenkwinkels ab, so dass erst dann Brausefluid aus dem Brauseaustritt auszutreten beginnt, während nach aktivem Brausebetrieb, wenn der Schwenkkörper von seiner Betriebsposition in seine Ruheposition zurückschwenkt, das Absperrventil die Brausefluidzufuhr zum Brauseaustritt erst bei einem vorgegebenen Absperr-Schwenkwinkel vollständig absperrt, der näher bei der Ruheposition liegt als der Freigabe-Schwenkwinkel. Es kann daher noch etwas länger Brausefluid aus dem Brauseaustritt austreten, bevor das Absperrventil die Brausefluidzufuhr zum Brauseaustritt vollständig absperrt und der Schwenkkörper seine Ruheposition erreicht. Dies kann für entsprechende Anwendungsfälle vorteilhaft sein, beispielsweise für den Zweck, zu vermeiden, dass in der Brause bzw. im in die Ruheposition verschwenkten Schwenkkörper noch unter Druck stehendes Brausefluid verbleibt.

In einer Weiterbildung der Erfindung weist die Schwenkbrause einen Schwenkantrieb zum angetriebenen Verschwenken des Schwenkkörpers in Abhängigkeit von einem Fluiddruck des zugeführten Brausefluids auf. Dadurch kann mittels einer üblichen, vorgelagerten Regulierung der Brausefluidzufuhr zum Brausekörper der Schwenkkörper selbsttätig zwischen seiner Ruheposition und seiner Betriebsposition verschwenkt werden, und durch die Verschwenkung des Schwenkkörpers kann mittels des Absperrventils der Fluidströmungsweg im Brausekörper in gewünschter Weise abgesperrt bzw. freigegeben werden. Es sind hierzu keinerlei manuelle Manipulationen durch den Benutzer am Brausekörper erforderlich.

In einer Weiterbildung der Erfindung beinhaltet das Absperrventil ein erstes Ventilelement, das mit dem Schwenkkörper bewegungsgekoppelt ist, und ein mit dem ersten zusammenwirkendes zweites Ventilelement, relativ zu dem das erste Ventilelement beweglich angeordnet ist. Das Verschwenken des Schwenkkörpers veranlasst in diesem Fall eine Relativbewegung der beiden Ventilelemente gegeneinander, wodurch mittels Zusammenwirken der beiden Ventilelemente das Absperrventil die geforderten Ventilfunktionen bereitstellen kann.

In einer Ausgestaltung der Erfindung ist hierbei das erste Ventilelement gegenüber dem zweiten Ventilelement drehbeweglich und mit dem Schwenkkörper drehgekoppelt. Das Verschwenken des Schwenkkörpers bewirkt in diesem Fall ein Verdrehen des ersten Ventilelements gegenüber dem zweiten Ventilelement, wodurch wiederum die geforderten Ventilfunktionen für das Absperrventil bereitgestellt werden können.

In einer weiteren Ausgestaltung der Erfindung beinhaltet das zweite Ventilelement einen Ventilschließkörper, während das erste Ventilelement eine Ventilsteuerkontur für den Ventilschließkörper aufweist, die sich mit der Schwenkbewegung des Schwenkkörpers relativ zum Ventilschließkörper verdreht. Dadurch werden die geforderten Funktionen des Absperrventils zuverlässig und in einer konstruktiv vorteilhaften Weise bereitgestellt. Durch das Verdrehen der Ventilsteuerkontur gegenüber dem Ventilschließkörper kann der Ventilschließkörper mit unterschiedlichen Bereichen der Ventilsteuerkontur zusammenwirken, so dass dieses Zusammenwirken je nach Bereich ein Absperren oder Freigeben des vom Absperrventil gesteuerten Fluidströmungsweges bewirken kann.

In einer weiteren Ausgestaltung der Erfindung weist das erste Ventilelement eine Ventilsteuerhülse auf, an deren Außenumfang die Ventilsteuerkontur ausgebildet ist. Dies stellt eine konstruktiv und funktionell vorteilhafte Realisierung für das relativ zum Ventilschließkörper verdrehbare erste Ventilelement dar.

In einer weiteren Ausgestaltung der Erfindung umfasst die Ventilsteuerkontur eine Absperrkontur, mit welcher der Ventilschließkörper den Fluidströmungsweg vollständig absperrend zusammenwirkt, und eine Freigabekontur, mit welcher der Ventilschließkörper den Fluidströmungsweg wenigstens teilweise freigebend zusammenwirkt, wobei der Ventilschließkörper abhängig von einer Schwenklage des Schwenkkörpers mit der Absperrkontur oder der Freigabekontur zusammenwirkt. Dies stellt eine konstruktiv und funktionell vorteilhafte Realisierung für die Ventilsteuerkontur des ersten Ventilelement dar.

In einer weiteren Ausgestaltung der Erfindung sind die Absperr- und die Freigabekontur einerseits und der Ventilschließkörper andererseits dafür eingerichtet bzw. derart aufeinander abgestimmt, dass der Ventilschließkörper beim Verschwenken des Schwenckörpers aus der Ruheposition in die Betriebsposition mit der Absperrkontur zusammenwirkt, bis der Schwenkkörper eine Freigabewinkellage erreicht hat, und anschließend mit der Freigabekontur zusammenwirkt und beim Verschwenken des Schwenkkörpers aus der Betriebsposition in die Ruheposition zunächst mit der Freigabekontur zusammenwirkt, bis der Schwenkkörper eine Absperrwinkellage erreicht hat, und anschließend mit der Absperrkontur zusammenwirkt, wobei die Absperrwinkellage näher an der Ruheposition liegt als die Freigabewinkellage. Dies stellt eine konstruktiv vorteilhafte Realisierungsmöglichkeit für die oben erwähnte Implementierung einer Schalthysterese für das Absperrventil dar.

In einer weiteren Ausgestaltung der Erfindung ist das erste Ventilelement mit seiner Ventilsteuerkontur gegenüber dem Ventilschließkörper axialbeweglich angeordnet und nimmt abhängig von der Schwenklage und Schwenkrichtung des Schwenkkörpers eine von zwei Axialpositionen ein. Dabei überlappen die Absperrkontur und die Freigabekontur in einem Drehwinkel-Überlappungsbereich, d.h. in einem entsprechenden Überlappungsbereich in Drehrichtung, und liegen in Axialrichtung nebeneinander. Folglich kann bei dieser Ausgestaltung das Umschalten des Absperrventils zwischen seiner vollständig absperrenden Stellung und seiner mindestens teilweise freigebenden Stellung auch durch eine Axialbewegung des ersten Ventilelements mit seiner Ventilsteuerkontur gegenüber dem Ventilschließkörper erfolgen. Diese Realisierungsvariante kann beispielweise in Verbindung mit einer Bereitstellung der erwähnten Schalthysteresefunktion von Vorteil sein.

Vorteilhafte Ausführungsformen der Erfindung sind in den Zeichnungen dargestellt und werden nachfolgend beschrieben. Hierbei zeigen:
- Fig. 1: eine Längsschnittansicht einer Schwenkbrause mit brausekörperintegriertem Absperrventil in Absperrposition,
- Fig. 2: die Ansicht von Fig. 1 mit dem Absperrventil in Freigabeposition,
- Fig. 3: eine Schnittansicht längs einer Linie III-III von Fig. 1,
- Fig. 4: eine Schnittansicht längs einer Linie IV-IV von Fig. 2,
- Fig. 5: eine Perspektivansicht einer Ventilsitzhülse des Absperrventils,
- Fig. 6: eine Perspektivansicht eines drehbeweglichen Ventilelements des Absperrventils mit Ventilsitzhülse,
- Fig. 7: eine Abwicklungsdarstellung einer Ventilsitzhülse nach Art von Fig. 5 oder 6 in verschiedenen Ventilpositionen,
- Fig. 8: eine Perspektivansicht einer Schwenkbrause mit fluiddruckgetriebenem Schwenkkörper und zwei Absperrventilen der in den Fig. 1 bis 7 gezeigten Art in brauseaktiver Schwenkstellung,
- Fig. 9: eine Detailschnittansicht der Schwenkbrause von Fig. 8 in einem Absperrventilbereich und
- Fig. 10: die Schnittansicht von Fig. 9 in einer brauseinaktiven Position der Schwenkbrause.

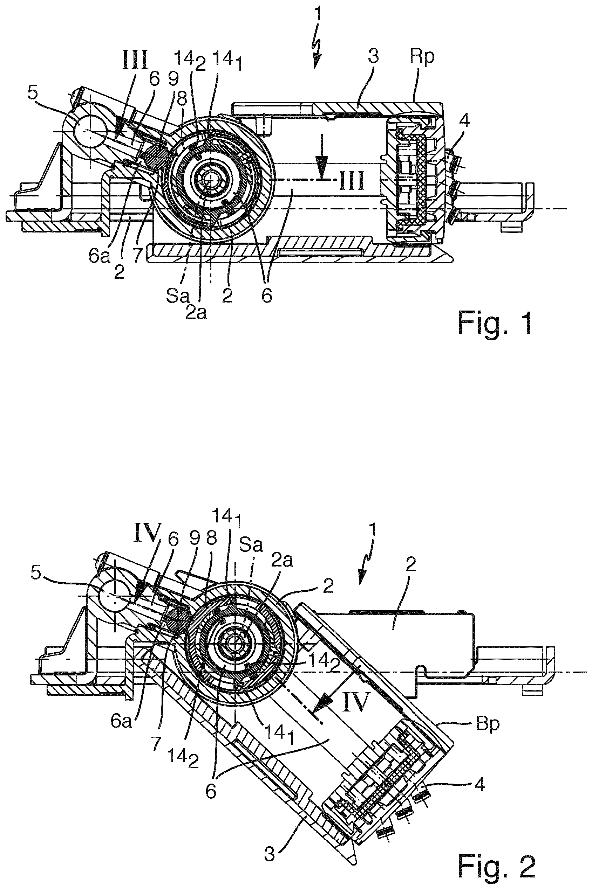

Die in den Fig. 1 bis 7 gezeigte Schwenkbrause weist einen Brausekörper 1 auf, der einen Grundkörper 2, einen Schwenkkörper 3 mit einem Brauseaustritt 4 sowie einen Brausefluideinlass 5 und einen Fluidströmungsweg 6 vom Brausefluideinlass 5 zum Brauseaustritt 4 umfasst. Der Schwenkkörper 3 ist zwischen einer in Fig. 1 gezeigten Ruheposition Rp, in welcher sich der Schwenkbrause nicht im aktiven Brausebetrieb befindet, und einer in Fig. 2 gezeigten Betriebsposition Bp schwenkbeweglich angeordnet, wobei die Betriebsposition Bp des Schwenkkörpers 3 eine Position für aktiven Brausebetrieb bildet, in welchem am Brausefluideinlass 5 zugeführtes Brausefluid, wie Wasser, über den Fluidströmungsweg 6 zum Brauseaustritt 4 gelangen und dort als gewünschter Brausestrahl von der Schwenkbrause abgegeben werden kann. Soweit hier nicht näher gezeigt und beschrieben, kann die Schwenkbrause im Übrigen von irgendeiner beliebigen der dem Fachmann geläufigen, herkömmlichen Ventilkonstruktionen sein. Die Schwenkbrause kann insbesondere als eine sanitäre Schwenkbrause ausgeführt sein, beispielsweise als decken- bzw. wandmontierte schwenkbare Kopf- oder Seitenbrause für Duschräume.

Im Brausekörper 1 ist im Fluidströmungsweg 6 zwischen dem Brausefluideinlass 5 und dem Brauseaustritt 4 ein Absperrventil 7 angeordnet, das den Fluidströmungsweg 6 abhängig von einer Schwenklage des Schwenkkörpers 3 absperrt, wobei es den Fluidströmungsweg 6 in der Ruheposition Rp des Schwenkkörpers 3 vollständig absperrt und in der Betriebsposition Bp des Schwenkkörpers 3 vollständig freigibt.

Im gezeigten Ausführungsbeispiel beinhaltet das Absperrventil 7 ein erstes Ventilelement 8, das mit dem Schwenkkörper 3 bewegungsgekoppelt ist, und ein mit dem ersten zusammenwirkendes zweites Ventilelement 9, wobei das erste Ventilelement 8 relativ zum zweiten Ventilelement 9 beweglich angeordnet ist.

Im gezeigten Ausführungsbeispiel ist das erste Ventilelement 8 gegenüber dem zweiten Ventilelement 9 drehbeweglich, und es ist mit dem Schwenkkörper 3 drehgekoppelt. Alternativ kann eine andere herkömmliche Art der Bewegungskopplung des ersten Ventilelements 8 mit dem Schwenkkörper 3 vorgesehen sein, z.B. unter Verwendung eines Getriebes, welches die Schwenkbewegung des Schwenkkörpers 3 z.B. in eine Linearbewegung des ersten Ventilelements 8 umsetzt. Die drehfeste Kopplung des ersten Ventilelements 8 mit dem Schwenkkörper 3 erfolgt im gezeigten Beispiel über einen Anschlussstutzen 3a des Schwenkkörpers 3, wobei der Anschlusstutzen 3a mit einem hülsenförmigen Abschnitt 3b an einer Lagerhülse 2b des Grundkörpers 2 um eine Schwenkachse Sa des Schwenkkörpers 3 drehbeweglich gelagert ist. Die Lagerhülse 2b sitzt drehfest auf einem Ringstummel 2a des Grundkörpers 2. Auf dem hülsenförmigen Abschnitt 3b sitzt drehfest und axial beweglich das erste Ventilelement 8, z.B. in Form einer Ventilsteuerhülse 8a. In alternativen Ausführungen kann das erste Ventilelement 8 über ein Getriebe mit dem Schwenkkörper 3 drehgekoppelt sein, bei Bedarf mit einer vorgebbaren Über- oder Untersetzung.

Im gezeigten Ausführungsbeispiel beinhaltet das zweite Ventilelement 9 einen Ventilschließkörper 9a, bei dem es sich beispielsweise um eine herkömmliche Ventilkugel oder einen anderen herkömmlichen Ventilschließkörper, wie eine Ventilscheibe oder ein Ventilkegel, handeln kann. Das erste Ventilelement 8 bzw. die Ventilsteuerhülse 8a weist eine Ventilsteuerkontur 10 für den Ventilschließkörper 9a auf, die sich mit der Schwenkbewegung des Schwenkkörpers 3 relativ zum Ventilschließkörper 9a verdreht. Im gezeigten Beispiel ist die Ventilsteuerkontur 10 am Außenumfang der Ventilsteuerhülse 8a ausgebildet. In alternativen Ausführungen ist das erste Ventilelement 8 nicht als Hülse gestaltet, sondern besitzt eine andere Form, z.B. als Ventilsteuerzylinder oder Ventilsteuerkugel, an dessen bzw. deren Oberfläche die Ventilsteuerkontur 10 ausgebildet ist.

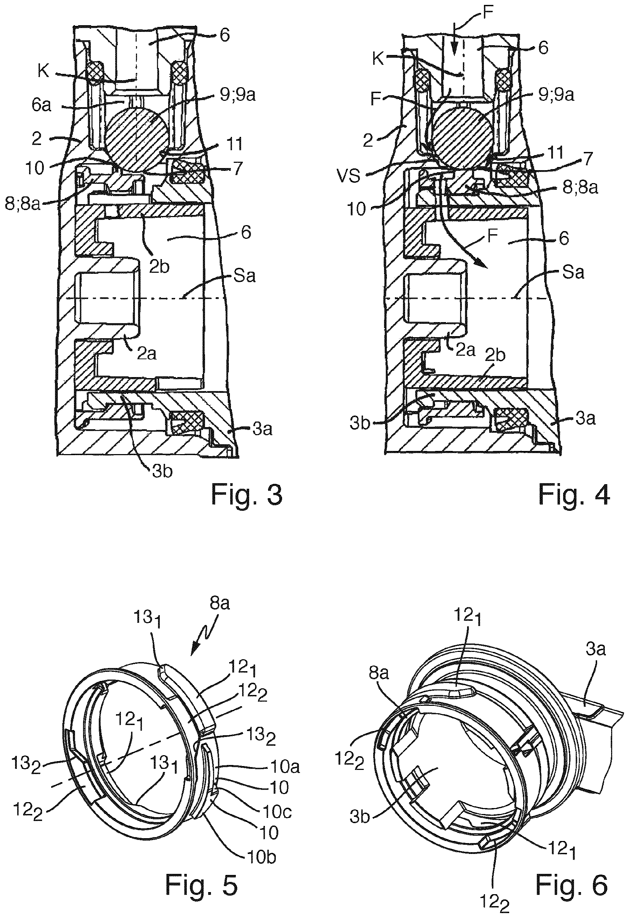

In der Realisierung, wie sie aus den Fig. 1 bis 6 ersichtlich ist, ist der z.B. kugelförmige Ventilschließkörper 9a in einem im Grundkörper 2 ausgebildeten Kanalabschnitt 6a des Fluidströmungsweges 6 beweglich angeordnet, z.B. parallel zu einer Längsachse K des Kanalabschnitts 6a beweglich. In einer in Fig. 3 gezeigten Absperrstellung sitzt der Ventilschließkörper 9a abdichtend gegen einen korrespondierend z.B. kugelschalenabschnittförmig geformten Ventilsitz 11 an, der am Grundkörper 2 ausgebildet ist, und sperrt dadurch den Fluidströmungsweg 6 vollständig ab. In einer in Fig. 4 gezeigten Freigabestellung befindet sich der Ventilschließkörper 9a in einer vom Ventilsitz 11 abgehobenen Position, wobei die Ventilsteuerkontur 10 durch Verdrehen des ersten Ventilelements 8 bzw. der Ventilsteuerhülse 8a den Ventilschließkörper 9a aus seiner Absperrstellung von Fig. 3 herausdrückt und ihn in der angehobenen Freigabestellung von Fig. 4 hält.

Die Ventilstellung von Fig. 3 stellt somit eine Absperrposition des Absperrventils 7 dar, in der es sich mindestens dann befindet, wenn der Schwenkkörper 3 seine Ruheposition Rp gemäß Fig. 1 einnimmt. Dadurch gewährleistet das Absperrventil 7, dass in der Ruheposition Rp des Schwenkkörpers 3 kein Brausefluid aus dem Brauseaustritt 4 austreten kann, so dass sich die Brause wie gewünscht im brauseinaktiven Zustand befindet.

Hingegen befindet sich das Absperrventil 7 bei der Ventilstellung von Fig. 4 in seiner Freigabeposition, in welcher es den Fluidströmungsweg 6 mindestens teilweise freigibt. Dies ist im gezeigten Beispiel dadurch realisiert, dass durch das Abheben des Ventilschließkörpers 9a vom Ventilsitz 11 ein Durchgangsspalt VS zwischen dem Ventilschließkörper 9a und dem Ventilsitz 11 besteht. Mit dem Durchgangsspalt VS hält das Absperrventil 7 den Fluidströmungsweg 6 durchgängig, d.h. offen, so dass zugeführtes Brausefluid, das in den Kanalabschnitt 6a gelangt, am Ventilschließkörper 9a vorbei durch den ventilseitigen Durchgangsspalt VS hindurch in Richtung Brauseaustritt 4 strömen kann, wie mit Strömungspfeilen F veranschaulicht. Diese Freigabeposition nimmt das Absperrventil 7 insbesondere dann ein, wenn sich der Schwenkkörper 3 in seiner brauseaktiven Betriebsposition Bp gemäß Fig. 2 befindet.

Das Absperrventil 7 weist eine Schalthysterese auf, durch die es den Fluidströmungsweg 6 beim Verschwenken des Schwenkkörpers 3 aus der Ruheposition Rp in Richtung der Betriebsposition Bp später freizugeben beginnt als es ihn beim Verschwenken des Schwenkkörpers 3 aus der Betriebsposition Bp in Richtung der Ruheposition Rp vollständig absperrt. Mit anderen Worten bleibt das Absperrventil 7 beim Herausschwenken des Schwenkkörpers 3 aus seiner Ruheposition Rp in seiner Absperrposition gemäß den Fig. 1 und 4, bis der Schwenkkörper 3 eine Freigabewinkellage erreicht, die durch einen vorgebbaren Freigabewinkel definiert ist. Ein weiteres Verschwenken des Schwenkkörpers 3 in Richtung Betriebsposition Bp hat zur Folge, dass das Absperrventil 7 betätigt wird und dadurch den Fluidströmungsweg 6 freigibt, d.h. öffnet. Dies kann je nach Bedarf und entsprechender Systemauslegung abrupt oder stetig erfolgen, wobei in jedem Fall das Absperrventil 7 seine den Fluidströmungsweg 6 vollständig öffnende bzw. freigebende Stellung gemäß den Fig. 2 und 4 erreicht hat, wenn der Schwenkkörper 3 seine Betriebsposition Bp erreicht hat.

Beim Zurückschwenken des Schwenkkörpers 3 von seiner Betriebsposition Bp in seine Ruheposition Rp bleibt das Absperrventil 7 zunächst in einer den Fluidströmungsweg 6 mindestens teilweise freigebenden Stellung, bis der Schwenkkörper 3 eine Absperrwinkellage erreicht hat, die durch einen entsprechend vorgegebenen Absperrwinkel des Schwenkkörpers 3 definiert ist. Gemäß der implementierten Schalthysterese liegt diese Absperrwinkellage des Schwenkkörpers 3 näher an der Ruheposition Rp als die Freigabewinkellage, d.h. der Winkel zwischen der Ruhepositions-Winkellage und der Absperrwinkellage des Schwenkkörpers 3 ist kleiner als der Winkel zwischen der Ruhepositions-Winkellage und der Freigabewinkellage. Erst wenn der Schwenkkörper 3 seine Absperrwinkellage erreicht bzw. überschritten hat, nimmt das Absperrventil 7 seine Absperrposition ein, in welcher es den Fluidströmungsweg 6 vollständig absperrt, wobei es diese Absperrposition beim ggf. restlichen Zurückschwenken des Schwenkkörpers 3 in seine Ruheposition Rp beibehält. In einer entsprechenden Realisierung kann die Absperrwinkellage des Schwenkkörpers 3 auch mit seiner Ruheposition Rp zusammenfallen, d.h. das Absperrventil 7 sperrt in diesem Fall den Fluidströmungsweg 6 erst dann vollständig ab, wenn der Schwenkkörper 3 beim Zurückschwenken seine Ruheposition Rp erreicht hat.

Diese Schalthysterese des Absperrventils 7 kann für entsprechende Anwendungsfälle von Vorteil sein, da sie es ermöglicht, dass beim Zurückschwenken des Schwenkkörpers 3 aus seiner Betriebsposition Bp in seine Ruheposition Rp noch relativ lange Brausefluid aus dem Brauseaustritt 4 austreten kann, während andererseits beim Herausschwenken des Schwenkkörpers 3 aus seiner Ruheposition Rp in Richtung Betriebsposition Bp das Austreten von Brausefluid aus dem Brauseaustritt 4 unterbunden bleibt, bis der Schwenkkörper 3 seine Freigabewinkellage erreicht hat.

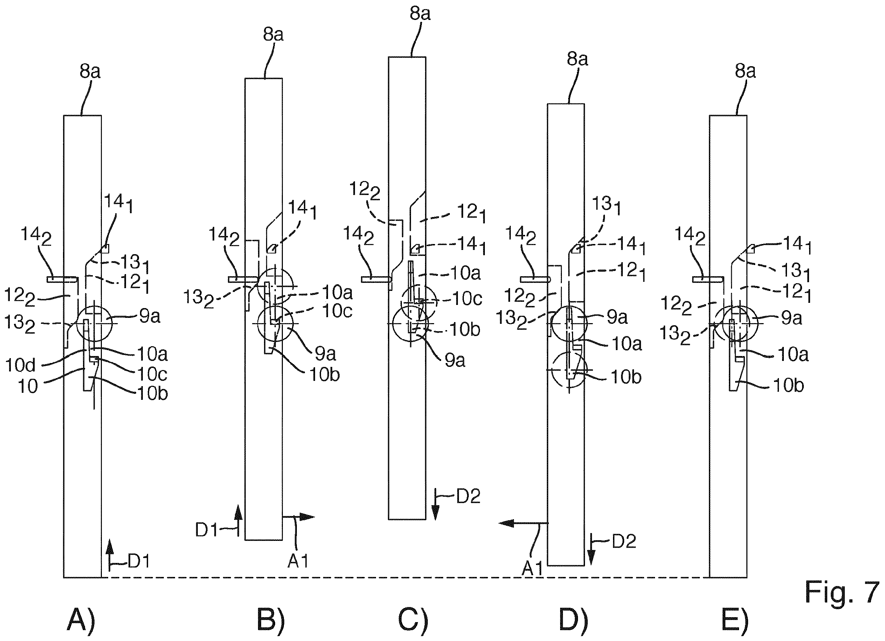

Eine vorteilhafte Realisierungsmöglichkeit für diese Schalthysterese ist im gezeigten Ausführungsbeispiel insbesondere anhand der Fig. 5 bis 7 zu erkennen. Dabei zeigt Fig. 6 eine zu derjenigen von Fig. 5 seitenverkehrte Realisierung der Ventilsteuerhülse 8a. Fig. 7 illustriert die Ventilsteuerhülse 8a von Fig. 5 in einer Abwicklungsdarstellung in fünf unterschiedlichen, aufeinanderfolgenden Positionen A bis E im Verlauf eines Schwenkbewegungsvorgangs des Schwenkkörpers 3. Wie daraus ersichtlich, beinhaltet die Ventilsteuerhülse 8a an ihrer außenseitigen Mantelfläche die Ventilsteuerkontur 10 in Form einer radial inneren Absperrkontur 10a und einer gegenüber dieser radial nach außen vorstehenden Freigabekontur 10b. Außerdem weist die Ventilsteuerhülse 8a mindestens eine erste Axialführungskontur 12₁ und mindestens eine zweite Axialführungskontur 12₂ auf, die jeweils von radial nach außen ausgebauchten Bereichen der Hülsenmantelfläche gebildet sind und auf in Drehrichtung entgegengesetzten Enden jeweils eine zugehörige erste bzw. zweite Schrägfläche 13₁, 13₂ beinhalten. Im gezeigten Beispiel sind je zwei sich diametral gegenüberliegende erste bzw. zweite Axialführungskonturen vorgesehen. Mit jeder ersten Axialführungskontur 12₁ wirkt jeweils ein erster, am Grundkörper 2 ausgebildeter Axialführungsnocken 14₁ zusammen, mit der zweiten Axialführungskontur 12₂ wirkt jeweils ein zweiter, am Grundkörper 2 ausgebildeter Axialführungsnocken 14₂ zusammen.

Die in Fig. 7 linke Position A der Ventilsitzhülse 8a entspricht der Absperrposition des Absperrventils 7 gemäß den Fig. 1 und 3 in der Ruheposition Rp des Schwenkkörpers 3. Der Ventilschließkörper 9a, der in Fig. 7 zum besseren Verständnis in seiner relativen Lage zur Ventilsitzhülse 8a und gestrichelt in seiner jeweils vorherigen Lage angegeben ist, wirkt in dieser Stellung mit der Absperrkontur 10a der Ventilsteuerkontur 10 zusammen. Da die Absperrkontur 10a tiefer liegt als die Freigabekontur 10b, d.h. auf der Ventilsteuerhülse 8a radial weiter innen, lässt die Absperrkontur 10a den Ventilschließkörper 9a seine fluiddicht gegen die Ventilsitzkontur 11 anliegende Absperrlage einnehmen.

Wenn der Schwenkkörper 3 aus seiner Ruheposition Rp herausgeschwenkt wird, verdreht sich entsprechend die Ventilsteuerhülse 8a gegenüber dem Ventilschließkörper 9a, symbolisiert durch einen Pfeil D1, wobei der Ventilschließkörper 9a zunächst weiterhin mit der sich über eine entsprechende Drehwinkel- bzw. Umfangslänge erstreckenden Absperrkontur 10a zusammenwirkt, bis der Schwenkkörper 3 seine Freigabewinkellage erreicht hat, in der sich dann die Ventilsteuerhülse 8a in Position B von Fig. 7 befindet. In dieser Position B der Ventilsteuerhülse 8a beginnt die Freigabekontur 10b mit dem Ventilschließkörper 9a zusammenzuwirken. Optional weist die Freigabekontur 10b hierzu eine schräge Anlauffläche 10c auf, die es dem Ventilschließkörper 9a erleichtern kann, vom tieferliegenden Bereich der Absperrkontur 10a auf den höher liegenden Bereich der Freigabekontur 10b zu gelangen. Außerdem verstetigt die schräge Anlauffläche 10c das Öffnen des Absperrventils 7 durch das entsprechend stetiges Anheben des Ventilschließkörpers 9a von der Ventilsitzkontur 11 zur Bildung des vollen Durchgangsspalts VS. Bei weiterem Verschwenken des Schwenkkörpers 3 in Richtung Betriebsposition Bp wirkt der Ventilschließkörper 9a mit der Freigabekontur 10b zusammen, wobei die Freigabekontur 10b im gezeigten Beispiel den Ventilschließkörper 9a von der Ventilsitzkontur 11 abhebt, so dass das Absperrventil 7 den Fluidströmungsweg 6 öffnet.

Außerdem bewirkt bei weiterem Verschwenken des Schwenkkörpers 3 in Richtung seiner Betriebsposition Bp das Zusammenwirken der zweiten Axialführungskontur 12₂ mit dem zweiten Axialführungsnocken 14₂ ein axiales Verschieben der Ventilsteuerhülse 8a gegenüber dem Ventilschließkörper 9a, symbolisiert durch einen Pfeil A1, indem die zweite Axialführungskontur 12₂ mit ihrer Schrägfläche 13₂ gegen den am Grundkörper 2 feststehenden zweiten Axialführungsnocken 14₂ anläuft. Durch dieses axiale Verschieben der Ventilsteuerhülse 8a relativ zum Ventilschließkörper 9a in Fig. 7 nach rechts ändert sich am Zusammenwirken des Ventilschließkörpers 9a mit der Freigabekontur 10b nichts, wozu letztere eine ausreichende axiale Breite aufweist. Das mittlere Teilbild in Fig. 7 zeigt dann die Position C der Ventilsteuerhülse 8a, wenn der Schwenkkörper 3 seine Betriebsposition Bp erreicht hat.

Wenn der Schwenkkörper 3 aus seiner Betriebsposition Bp in Richtung Ruheposition Rp zurückgeschwenkt und dadurch die Ventilsteuerhülse 8a zurückgedreht wird, siehe Pfeil D2, verbleibt das Absperrventil 7 zunächst in seiner Freigabeposition, indem der Ventilschließkörper 9a weiterhin mit der Freigabekontur 10b zusammenwirkt, und zwar bis der Schwenkkörper 3 seine Absperrwinkellage erreicht. Dies entspricht dann der Position D der Ventilsteuerhülse 8a in Fig. 7. In der Axialstellung, in welcher sich die Ventilsteuerhülse 8a während dieses Abschnitts der Rückschwenkbewegung des Schwenkkörpers 3 befindet, erstreckt sich die Freigabekontur 10b mit einem schmalen Stegbereich 10d in Drehwinkelrichtung über die schräge Anlauffläche 10c hinaus. Dadurch bleibt der Ventilschließkörper 9a beim Zurückschwenken des Schwenkkörpers 3 entsprechend länger in seiner von der Ventilsitzkontur 11 abgehobenen Position und das Absperrventil 7 entsprechend länger in seiner Freigabeposition, was die erwähnte Schalthysterese bereitstellt. In Fig. 7 ist die Schalthysterese daran erkennbar, dass sich die Ventilsteuerhülse 8a mit ihrer Drehstellung in der Position D näher an der Position A liegt als in der Position B, wobei wie gesagt die Position A der Ruheposition Rp des Schwenkkörpers 3 und die Position B der Freigabewinkellage des Schwenkkörpers 3 entspricht. In alternativen Beispielen ohne Schalthysterese, welche nicht Teil der Erfindung sind, <ann der schmale Stegbereich 10d der Freigabekontur 10b entfallen.

Bei weiterem Zurückschwenken des Schwenkkörpers 3 in Richtung Ruheposition Rp wird das Zusammenwirken der ersten Axialführungskontur 12₁ mit dem ersten Axialführungsnocken 14₁ aktiv, indem die zugehörige erste Schrägfläche 13₁ gegen den ersten Axialführungsnocken 14₁ anläuft. Dies führt zu einer axialen Rückverschiebung der Ventilsteuerhülse 8a, siehe Pfeil A2, wodurch der Ventilschließkörper 9a axial aus dem schmalen Stegbereich 10d der Freigabekontur 10b herausgelangt und in den tieferliegenden Bereich der axial benachbarten Absperrkontur 10a wechselt. Durch dieses erneute Zusammenwirken des Ventilschließkörpers 9a mit der Absperrkontur 10a kann der Ventilschließkörper 9a wieder seine den Fluidströmungsweg 6 vollständig absperrende Lage einnehmen, in welcher er fluiddicht gegen die Ventilsitzkontur 11 anliegt. Wenn der Schwenkkörper 3 seine Ruheposition Rp erreicht hat, hat auch die Ventilsteuerhülse 8a wieder ihre entsprechende Ausgangsposition entsprechend der Position A in Fig. 7 erreicht.

Somit ist in dieser Realisierung das erste Ventilelement 8 mit seiner Ventilsteuerkontur 10 gegenüber dem Ventilschließkörper 9a axialbeweglich angeordnet und nimmt abhängig von der Schwenklage und Schwenkrichtung des Schwenkkörpers eine von zwei Axialpositionen ein, wobei die Absperrkontur 10a und die Freigabekontur 10b, hier mit dem Stegbereich 10d, in einem Drehwinkel-Überlappungsbereich überlappen und in Axialrichtung nebeneinander liegen.

Wie oben erwähnt, lässt sich das in den Fig. 1 bis 7 veranschaulichte Absperrventil 7 für beliebige Arten von Schwenkbrausen mit gegenüber einem Grundkörper verschwenkbarem Schwenkkörper einsetzen. Das Verschwenken des Schwenkkörpers 3 kann je nach Anwendung vom Benutzer von Hand oder selbsttätig durch einen Antrieb erfolgen.

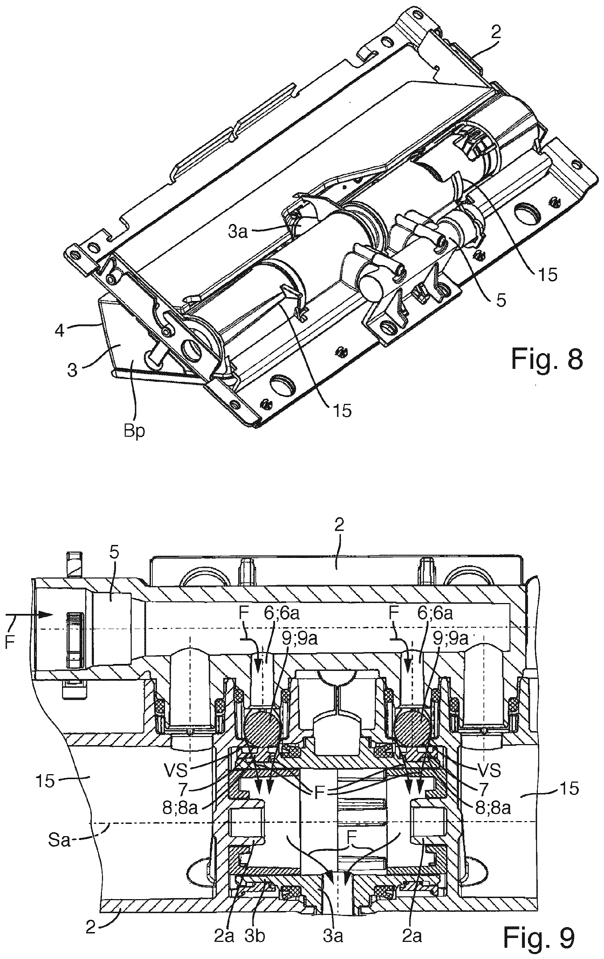

Die Fig. 8 bis 10 veranschaulichen die Verwendung des Absperrventils 7 in einer Schwenkbrause, wie sie insbesondere als deckenmontierte Kopfbrause oder wandmontierte Seitenbrause in Duscheinrichtungen eingesetzt werden kann. Dieses Realisierungsbeispiel einer erfindungsgemäßen Schwenkbrause beinhaltet einen Schwenkantrieb 15 zum angetriebenen Verschwenken des Schwenkkörpers 3 in Abhängigkeit von einem Fluiddruck des zugeführten Brausefluids. Einzelheiten dieses Schwenkantriebs sind in der deutschen Patentanmeldung 10 2007 203 945.0 angegeben, und bedürfen hier keiner näheren Erläuterung. Alternativ kann die in den Fig. 8 bis 10 dargestellte Schwenkbrause mit rahmenförmigem Grundkörper 1 und kassettenförmigen Schwenkkörper 2 auch vom Benutzer von Hand oder durch einen anderen, herkömmlichen Schwenkantrieb verschwenkt werden. Wie insbesondere aus Fig. 8 ersichtlich, besitzt diese Schwenkbrause mit Ausnahme eines den Brausefluideinlass 5 definierenden Fluideinlassrohres einen zu einer Mittenebene im Wesentlichen symmetrischen Aufbau, und entsprechend sind in dieser Schwenkbrause in zu dieser Mittenebene symmetrischer Anordnung zwei Absperrventile 7 der zu den Fig. 1 bis 7 erläuterten Art installiert, die synchron arbeiten.

Die Fig. 8 und 9 zeigen die Schwenkbrause mit dem Schwenkkörper 3 in seiner Betriebsposition Bp. Dementsprechend befinden sich die beiden Absperrventile 7 in ihrer Freigabeposition, in welcher sie mittels des jeweiligen Durchgangsspalts VS den hier in zwei parallele Zweige aufgeteilten Fluidströmungsweg 6 vollständig freigeben. Dadurch kann über den Brausefluideinlass 5 zugeführtes Brausefluid F in die beiden parallelen Kanalabschnitte 6a und durch die Ventil-Durchgangsspalte VS hindurch in den Anschlussstutzen 3a des Schwenkkörpers 3 und von dort weiter zu dessen Brauseaustritt 4 strömen. Insofern entspricht diese Position des Schwenkkörpers 3 und der Absperrventile 7 derjenigen der Fig. 1 und 3.

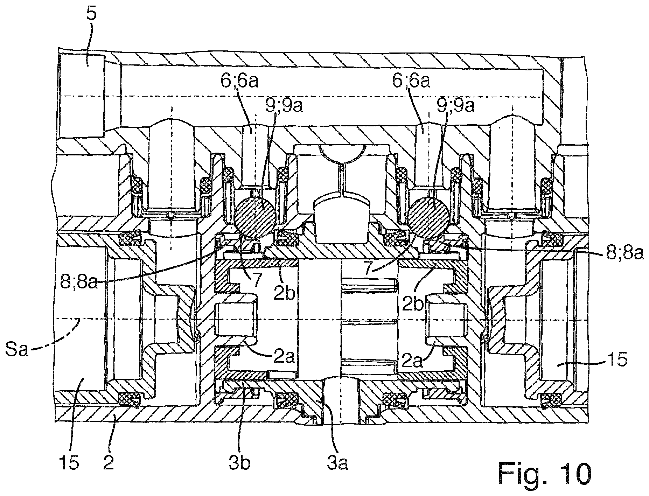

Fig. 10 zeigt die Schwenkbrause im Absperrventilbereich analog zu Fig. 9, wenn sie sich in ihrem inaktiven Zustand befindet, d.h. wenn sich der Schwenkkörper 3 in seiner Ruheposition Rp befindet. Die Absperrventile 7 sperren in diesem Fall den Fluidströmungsweg vollständig ab. Insofern entspricht diese Position derjenigen der Fig. 2 und 4. Zu weiteren Details hinsichtlich der Funktion der Absperrventile 7 kann auf die obigen Ausführungen zu den Fig. 1 bis 7 verwiesen werden.

Wie die gezeigten und oben erläuterten Ausführungsbeispiele deutlich machen, stellt die Erfindung eine Schwenkbrause mit sehr vorteilhaften Eigenschaften und relativ einfachem Aufbau zur Verfügung, wobei in den Brausekörper ein Absperrventil integriert ist, das in Reaktion auf eine Verschwenkung eines gegenüber einem Grundkörper schwenkbeweglichen Schwenkkörpers der Brause arbeitet. Die Schwenkbrause ist insbesondere im Sanitärbereich und hier speziell als wand- oder deckenmontierte Seiten- bzw. Kopfbrause verwendbar. Es versteht sich jedoch, dass die Schwenkbrause in gleicher Weise für nicht-sanitäre Anwendungen überall dort nutzbringend einsetzbar ist, wo Bedarf an einer Brause mit einem verschwenkbaren Brauseaustritt besteht.

## Patentansprüche

1. Schwenkbrause, insbesondere sanitäre Schwenkbrause, mit
- einem Brausekörper (1) mit einem Grundkörper (2), einem Schwenkkörper (3), der einen Brauseaustritt (4) aufweist und relativ zum Grundkörper zwischen einer Ruheposition (Rp) und einer Betriebsposition (Bp) schwenkbeweglich angeordnet ist, einem Brausefluideinlass (5) und einem Fluidströmungsweg (6) vom Brausefluideinlass zum Brauseaustritt, und
- einem im Brausekörper (1) im Fluidströmungsweg (6) zwischen dem Brausefluideinlass (5) und dem Brauseaustritt (4) angeordneten Absperrventil (7), das den Fluidströmungsweg abhängig von einer Schwenklage des Schwenkkörpers (3) absperrt, wobei es den Fluidströmungsweg in der Ruheposition (Rp) des Schwenkkörpers vollständig absperrt und ihn in der Betriebsposition (Bp) des Schwenkkörpers vollständig freigibt,
**dadurch gekennzeichnet, dass**
- das Absperrventil (7) eine Schalthysterese aufweist, durch die es den Fluidströmungsweg beim Verschwenken des Schwenkkörpers (3) aus der Ruheposition in Richtung der Betriebsposition später freizugeben beginnt als es ihn beim Verschwenken des Schwenkkörpers aus der Betriebsposition in Richtung der Ruheposition vollständig absperrt.

2. Schwenkbrause nach Anspruch 1, weiter **gekennzeichnet durch** einen Schwenkantrieb (15) zum angetriebenen Verschwenken des Schwenkkörpers in Abhängigkeit von einem Fluiddruck des zugeführten Brausefluids.

3. Schwenkbrause nach Anspruch 1 oder 2, weiter **dadurch gekennzeichnet, dass** das Absperrventil ein erstes Ventilelement (8), das mit dem Schwenkkörper bewegungsgekoppelt ist, und ein mit dem ersten zusammenwirkendes zweites Ventilelement (9) aufweist, wobei das erste Ventilelement relativ zum zweiten Ventilelement beweglich angeordnet ist.

4. Schwenkbrause nach Anspruch 3, weiter **dadurch gekennzeichnet, dass** das erste Ventilelement gegenüber dem zweiten Ventilelement drehbeweglich und mit dem Schwenkkörper drehgekoppelt ist.

5. Schwenkbrause nach Anspruch 4, weiter **dadurch gekennzeichnet, dass** das zweite Ventilelement einen Ventilschließkörper (9a) beinhaltet und das erste Ventilelement eine Ventilsteuerkontur (10) für den Ventilschließkörper aufweist, wobei sich die Ventilsteuerkontur mit der Schwenkbewegung des Schwenkkörpers relativ zum Ventilschließkörper verdreht.

6. Schwenkbrause nach Anspruch 5, weiter **dadurch gekennzeichnet, dass** das erste Ventilelement eine Ventilsteuerhülse (8a) aufweist, an deren Außenumfang die Ventilsteuerkontur ausgebildet ist.

7. Schwenkbrause nach Anspruch 5 oder 6, weiter **dadurch gekennzeichnet, dass** die Ventilsteuerkontur eine Absperrkontur (10a), mit welcher der Ventilschließkörper den Fluidströmungsweg vollständig absperrend zusammenwirkt, und eine Freigabekontur (10b) umfasst, mit welcher der Ventilschließkörper den Fluidströmungsweg wenigstens teilweise freigebend zusammenwirkt, wobei der Ventilschließkörper abhängig von einer Schwenklage des Schwenkkörpers mit der Absperrkontur oder der Freigabekontur zusammenwirkt.

8. Schwenkbrause nach Anspruch 7, weiter **dadurch gekennzeichnet, dass** der Ventilschließkörper beim Verschwenken des Schwenkkörpers aus der Ruheposition in die Betriebsposition mit der Absperrkontur zusammenwirkt, bis der Schwenkkörper eine Freigabewinkellage erreicht hat, und anschließend mit der Freigabekontur zusammenwirkt und beim Verschwenken des Schwenkkörpers aus der Betriebsposition in die Ruheposition zunächst mit der Freigabekontur zusammenwirkt, bis der Schwenkkörper eine Absperrwinkellage erreicht hat, und anschließend mit der Absperrkontur zusammenwirkt, wobei die Absperrwinkellage näher an der Ruheposition liegt als die Freigabewinkellage.

9. Schwenkbrause nach Anspruch 7 oder 8, weiter **dadurch gekennzeichnet, dass** das erste Ventilelement mit seiner Ventilsteuerkontur gegenüber dem Ventilschließkörper axialbeweglich angeordnet ist und abhängig von der Schwenklage und Schwenkrichtung des Schwenkkörpers eine von zwei Axialpositionen einnimmt und die Absperrkontur und die Freigabekontur in einem Drehwinkel-Überlappungsbereich überlappen und in Axialrichtung nebeneinander liegen.

## Claims

1. Swivel shower, preferably sanitary swivel shower, comprising
- a shower body (1) with a base body (2), a swivel body (3) including a shower outlet (4) and mounted for swivel movement relative to the base body between a rest position (Rp) and an operating position (Bp), a shower fluid inlet (5) and a fluid flow path (6) from the shower fluid inlet to the shower outlet, and
- a shut-off valve (7) arranged within the shower body (1) in the fluid flow path (6) between the shower fluid inlet (5) and the shower outlet (4), said valve blocking the fluid flow path as a function of a swivel position of the swivel body (3), wherein the fluid flow path is completely blocked in the rest position (Rp) of the swivel body and is completely unblocked in the operating position (Bp) of the swivel body,
**characterized in that**
- the shut-off valve (7) has a switching hysteresis, according to which the valve starts unblocking the fluid flow path during swiveling of the swivel body (3) from the rest position in the direction towards the operating position with a delay as compared to it completely blocking the fluid flow path during swiveling of the swivel body from the operating position in the direction towards the rest position.

2. Swivel shower according to claim 1, further **characterized by** a swivel drive (15) for driven swiveling of the swivel body as a function of a fluid pressure of the supplied shower fluid.

3. Swivel shower according to claim 1 or 2, further **characterized in that** the shut-off valve has a first valve element (8) coupled in movement to the swivel body, and a second valve element (9) cooperating with the first one, wherein the first valve element is disposed to be movable relative to the second valve element.

4. Swivel shower according to claim 3, further **characterized in that** the first valve element is rotatable in relation to the second valve element and coupled for rotary movement to the swivel body.

5. Swivel shower according to claim 4, further **characterized in that** the second valve element includes a valve closing body (9a), and the first valve element has a valve control contour (10) for the valve closing body, wherein the valve control contour turns relative to the valve closing body during the swivel movement of the swivel body.

6. Swivel shower according to claim 5, further **characterized in that** the first valve element includes a valve control sleeve (8a), with the valve control contour provided on the outer circumference thereof.

7. Swivel shower according to claim 5 or 6, further **characterized in that** the valve control contour comprises a blocking contour (10a), with the valve closing body cooperating therewith for complete blocking of the fluid flow path, and an unblocking contour (10b), with the valve closing body cooperating therewith for at least partial unblocking of the fluid flow path, wherein the valve closing body cooperates with the blocking contour or the unblocking contour as a function of a swivel position of the swivel body.

8. Swivel shower according to claim 7, further **characterized in that** the valve closing body during swiveling of the swivel body from the rest position to the operating position cooperates with the blocking contour until the swivel body has reached an unblocking angular position, and subsequently cooperates with the unblocking contour, and during swiveling of the swivel body from the operating position to the rest position initially cooperates with the unblocking contour until the swivel body has reached a blocking angular position, and subsequently cooperates with the blocking contour, wherein the blocking angular position is located closer to the rest position than the unblocking angular position.

9. Swivel shower according to claim 7 or 8, further **characterized in that** the first valve element with its valve control contour is arranged for axial movement in relation to the valve closing body, and as a function of the swivel position and swivel direction of the swivel body assumes one of two axial positions, and the blocking contour and the unblocking contour overlap in a rotary angle overlapping region and are adjacent in axial direction.

## Revendications

1. Douche pivotante, en particulier douche pivotante sanitaire, comportant
- un corps de douche (1) comprenant un corps de base (2), un corps pivotant (3) qui présente une sortie de douche (4) et qui est disposé de manière à pouvoir pivoter par rapport au corps de base entre une position de repos (Rp) et une position de fonctionnement (Bp), une entrée de fluide de douche (5) et un trajet d'écoulement de fluide (6) de l'entrée de fluide de douche à la sortie de douche, et
- une vanne d'arrêt (7) disposée dans le corps de douche (1) dans le trajet d'écoulement de fluide (6) entre l'entrée de fluide de douche (5) et la sortie de douche (4), qui ferme le trajet d'écoulement de fluide en fonction d'une position de pivotement du corps pivotant (3) en fermant complètement le trajet d'écoulement de fluide dans la position de repos (Rp) du corps pivotant et en le libérant complètement dans la position de fonctionnement (Bp) du corps pivotant,
**caractérisée en ce que**
- la vanne d'arrêt (7) présente une hystérésis de commutation par laquelle, lors du pivotement du corps pivotant (3) depuis la position de repos en direction de la position de fonctionnement, elle commence à libérer le trajet d'écoulement de fluide plus tard qu'elle ne le ferme complètement lors du pivotement du corps pivotant depuis la position de fonctionnement en direction de la position de repos.

2. Douche pivotante selon la revendication 1, **caractérisée en outre par** un entraînement de pivotement (15) pour le pivotement entraîné du corps pivotant en fonction d'une pression du fluide de douche alimenté.

3. Douche pivotante selon la revendication 1 ou 2, **caractérisée en outre en ce que** la vanne d'arrêt comprend un premier élément de vanne (8) couplé en mouvement au corps pivotant, et un second élément de vanne (9) coopérant avec le premier, le premier élément de vanne étant disposé de façon mobile par rapport au second élément de vanne.

4. Douche pivotante selon la revendication 3, **caractérisée en outre en ce que** le premier élément de vanne est mobile en rotation par rapport au second élément de vanne et est couplé en rotation au corps pivotant.

5. Douche pivotante selon la revendication 4, **caractérisée en outre en ce que** le second élément de vanne contient un corps de fermeture de vanne (9a), et le premier élément de vanne présente un contour de commande de vanne (10) pour le corps de fermeture de vanne, le contour de commande de vanne tournant avec le mouvement de pivotement du corps pivotant par rapport au corps de fermeture de vanne.

6. Douche pivotante selon la revendication 5, **caractérisée en outre en ce que** le premier élément de vanne comprend un manchon de commande de vanne (8a) sur le pourtour extérieur duquel est réalisé le contour de commande de vanne.

7. Douche pivotante selon la revendication 5 ou 6, **caractérisée en outre en ce que** le contour de commande de vanne présente un contour d'arrêt (10a) avec lequel le corps de fermeture de vanne coopère de manière à fermer complètement le trajet d'écoulement de fluide, et un contour de libération (10b) avec lequel le corps de fermeture de vanne coopère de manière à libérer au moins partiellement le trajet d'écoulement de fluide, le corps de fermeture de vanne coopérant avec le contour d'arrêt ou avec le contour de libération en fonction d'une position de pivotement du corps pivotant.

8. Douche pivotante selon la revendication 7, **caractérisée en outre en ce que** lors du pivotement du corps pivotant depuis la position de repos jusque dans la position de fonctionnement, le corps de fermeture de vanne coopère avec le contour d'arrêt jusqu'à ce que le corps pivotant ait atteint une position angulaire de libération, et ensuite il coopère avec le contour de libération, et lors du pivotement du corps pivotant depuis la position de fonctionnement jusque dans la position de repos, il coopère tout d'abord avec le contour de libération jusqu'à ce que le corps pivotant ait atteint une position angulaire d'arrêt, et ensuite il coopère avec le contour d'arrêt, la position angulaire d'arrêt étant plus près de la position de repos que la position angulaire de libération.

9. Douche pivotante selon la revendication 7 ou 8, **caractérisée en outre en ce que** le premier élément de vanne a son contour de commande de vanne disposé de façon axialement mobile par rapport au corps de fermeture de vanne et occupe une parmi deux positions axiales, en fonction de la position de pivotement et de la direction de pivotement du corps pivotant, et le contour d'arrêt et le contour de libération se chevauchent dans une zone de chevauchement d'angle de rotation et sont situés l'un à côté de l'autre en direction axiale.
